# EUROPÄISCHE PATENTSCHRIFT

(11) **EP 1 431 527 B1**
(45) Veröffentlichungstag und Bekanntmachung des Hinweises auf die Patenterteilung: **21.09.2005**
(21) Anmeldenummer: 03104104.9
(22) Anmeldetag: 06.11.2003
(51) Int. Cl.: F01N 3/02, F01N 3/04, F01N 7/18, F28D 7/16, F02D 9/04, F16K 1/22

(54) **Kühlelement für Gase**
Cooling device for gases
Dispositif de refroidissement de gaz

(30) Priorität: 20.12.2002 DE 10260251
(43) Veröffentlichungstag der Anmeldung: 23.06.2004
(73) Patentinhaber: SIEMENS AKTIENGESELLSCHAFT, 80333 München (DE)
(72) Erfinder: Anschicks, Rolf, 35510, Butzbach (DE); Krüger, Jörg, 60435, Frankfurt (DE)

(56) Entgegenhaltungen:
- EP-A- 1 251 263
- EP-A- 1 291 509
- DE-C- 914 450
- US-B1- 6 178 744

## Beschreibung

Die Erfindung bezieht sich auf ein Kühlelement für Gase, das aus einem Innenkanal und mehreren den Innenkanal umgebenden Außenkanälen besteht, die von einem Außenmantel umgeben sind, der mindestens einen ersten Stutzen für die Kühlmittelzufuhr und mindestens einen zweiten Stutzen für die Kühlmittelabfuhr aufweist, bei dem am einen Ende des Innenkanals eine auf einer senkrecht zur Strömungsrichtung der Gase angeordneten Klappenwelle fixierte Klappe angeordnet ist und das Kühlelement an dieser Seite einen Außenflansch aufweist, der mit dem Außenmantel, diesen abschließend, verbunden ist. Die Erfindung bezieht sich ferner auf eine Verwendung des Kühlelements. Kühlelemente für Gase sind bekannt. Sie werden in der Regel von Gasen durchströmt und sind mehrteilig aufgebaut. In der Regel weisen sie eine senkrecht zur Längsachse des Gehäuseflansches drehbar gelagerte Klappenwelle auf, auf der eine Klappe zum Verschließen von Rohrleitungseinheiten angeordnet ist. Die Lager für die Klappenwelle sind dabei direkt im Gehäuseflansch integriert. In der Regel ist es dabei gewünscht, dass die Gase nicht über die Lager der Klappenwelle ins Freie gelangen können, besonders dann, wenn die Gase Schadstoffe enthalten. Diese Möglichkeit ist dadurch gegeben, dass die Klappenwelle in der Regel von außen angetrieben wird, und eine entsprechende Abdichtung durch Dichtungsringe infolge hoher Temperaturen, denen der Gehäuseflansch meistens ausgesetzt ist, nicht wirkungsvoll realisiert werden kann.

Beispiele für Kühlelemente mit einem nachfolgenden Gehäuseflansch, in welchem eine Klappenwelle drehbar gelagert ist, sind in der DE 914 450 C und der nachveröffentlichten EP 1 291 509 A2 beschrieben. Darüber hinaus beschreibt die EP 1 251 263 A2 ein Kühlelement mit einer in einem nachfolgenden Gehäuseflansch gelagerten Klappenwelle, der über eine separate Kühlung verfügt. Hierdurch lässt sich zwar die Dichtigkeit der Lager verbessern, der konstruktive Aufwand ist jedoch beträchtlich.

Der Erfindung liegt daher die Aufgabe zugrunde, ein Kühlelement für Gase zu schaffen, durch welche ein Austritt des strömenden Mediums durch die Lagerung der Klappenwelle auch bei höheren Betriebstemperaturen wirkungsvoll vermieden werden kann.

Die der Erfindung zugrundeliegende Aufgabe wird dadurch gelöst, dass die Klappenwelle mit Lagern für die Klappenwelle, die im Außenmantel angeordnet sind, drehbar gelagert ist. Bei dem Innenkanal des Kühlelements handelt es sich in der Regel um ein Rohr. Durch den Außenmantel wird ein Raum für ein Kühlmittel geschaffen, das die Außenkanäle umströmt. Bei der Klappe handelt es sich in der Regel um ein Blech mit kreisrundem Querschnitt. Sie dient dem Verschließen des Innenkanals. Es hat sich in überraschender Weise gezeigt, dass ein Ausströmen des strömenden Mediums aus dem Kühlelement für Gase auch bei höheren Betriebstemperaturen vermieden werden kann, sofern die Lager für die Klappenwelle direkt im Außenmantel des Kühlelements für Gase und nicht im Außenflansch angeordnet sind. Dies ist deshalb möglich, da die Temperaturen im Außenmantel des Kühlelements niedriger sind als im Außenflansch, da die Lager für die Klappenwelle näher am Kühlmittelfluss positioniert sind. Auf diese Weise lässt sich somit die Lebensdauer merklich erhöhen.

Eine bevorzugte Ausgestaltung der Erfindung besteht darin, dass zwischen den Lagern für die Klappenwelle und der Klappenwelle Dichtelemente angeordnet sind. Dabei können beispielsweise Dichtungen eingesetzt werden, die aus einem kohlenstoffhaltigen Material bestehen. Dadurch lässt sich die Dichtigkeit in den Lagern verbessern.

Gegenstand der Erfindung ist schließlich die Verwendung des Kühlelements als Kühlelement zur Kühlung von Abgasen eines Kraftfahrzeuges. Gerade bei den Abgasen eines Kraftfahrzeuges ist gewünscht, dass die Abgase nicht durch die Lagerung der Klappenwelle ins Freie gelangen. Ferner ist gewünscht, einen Teil der Abgase auf höherer Temperatur zu halten. Das Kühlelement für Gase eignet sich daher im besonderen Maße zur Kühlung von Abgasen eines Kraftfahrzeuges.

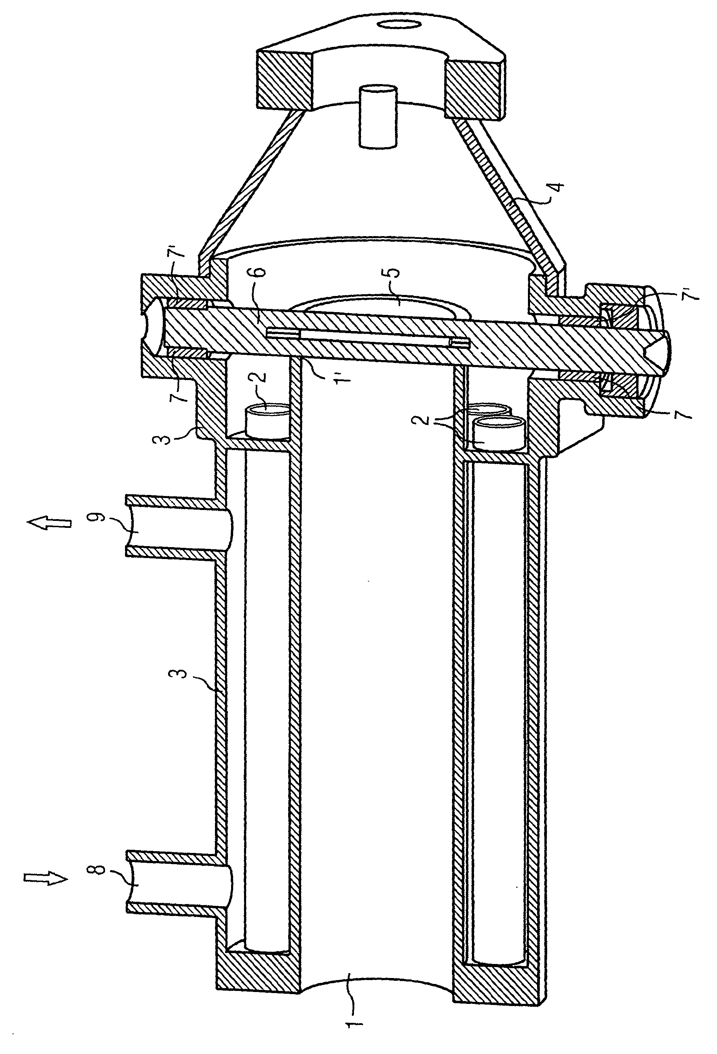

Die Erfindung wird nachfolgend anhand der Zeichnung (Fig.) näher und beispielhaft erläutert.
- Fig.: zeigt das Kühlelement für Gase vereinfacht und schematisch im Querschnitt.

In Fig. ist das Kühlelement für Gase im Querschnitt schematisch und vereinfacht dargestellt. Das Kühlelement besteht aus einem Innenkanal 1 und mehreren, den Innenkanal 1 umgebenden Außenkanälen 2, die von einem Außenmantel 3 umgeben sind. Der Außenmantel 3 weist einen ersten Stutzen 8 für die Kühlmittelzufuhr und einen zweiten Stutzen 9 für die Kühlmittelabfuhr auf. Der erste Stutzen 8 und der zweite Stutzen 9 sind vereinfacht dargestellt. Das Kühlmittel durchströmt dabei das Kühlelement für Gase in Pfeilrichtung. Am einen Ende 1' des Innenkanals 1 ist eine auf einer senkrecht zur Strömungsrichtung der Gase angeordneten Klappenwelle 6 fixierte Klappe 5 angeordnet. An dieser Seite weist das Kühlelement einen Außenflansch 4 auf, der mit dem Außenmantel 3, diesen abschließend, verbunden ist. Die Klappenwelle 6 ist mit Lagern 7 für die Klappenwelle 6, die im Außenmantel 3 angeordnet sind, drehbar gelagert. Zwischen den Lagern 7 für die Klappenwelle 6 und der Klappenwelle 6 sind Dichtelemente 7' angeordnet. Auf Grund der Anordnung der Lager 7 im Außenmantel 3 herrschen an den Lagern 7 im Vergleich zu einer Anordnung der Lager 7 im Außenflansch 4 niedrigere Temperaturen, was sich vorteilhaft auf die Abdichtung in den Lagern 7 bezüglich austretender Gase auswirkt. Das Kühlelement für Gase eignet sich im besonderen Maße als Kühlelement zur Kühlung von Abgasen eines Kraftfahrzeuges.

## Patentansprüche

1. Kühlelement für Gase, das aus einem Innenkanal (1) und mehreren den Innenkanal (1) umgebenden Außenkanälen (2) besteht, die von einem Außenmantel (3) umgeben sind, der mindestens einen ersten Stutzen (8) für die Kühlmittelzufuhr und mindestens einen zweiten Stutzen (9) für die Kühlmittelabfuhr aufweist, bei dem am einen Ende (1') des Innenkanals (1) eine auf einer senkrecht zur Strömungsrichtung der Gase angeordneten Klappenwelle (6) fixierte Klappe (5) angeordnet ist und das Kühlelement an dieser Seite einen Außenflansch (4) aufweist, der mit dem Außenmantel (3), diesen abschließend, verbunden ist, **dadurch gekennzeichnet, dass** die Klappenwelle (6) mit Lagern (7) für die Klappenwelle (6), die im Außenmantel (3) angeordnet sind, drehbar gelagert ist.

2. Kühlelement nach Anspruch 1, **dadurch**
**gekennzeichnet, dass** zwischen den Lagern (7) für die Klappenwelle (6) und der Klappenwelle (6) Dichtelemente (7') angeordnet sind.

3. Verwendung des Kühlelements nach Anspruch 1 oder 2 als Kühlelement zur Kühlung von Abgasen eines Kraftfahrzeuges.

## Claims

1. Cooling element for gases, which consists of an inner duct (1) and of a plurality of outer ducts (2) which surround the inner duct (1) and are surrounded by an outer casing (3) which has at least one first nipple (8) for the coolant supply and at least one second nipple (9) of the coolant discharge, in which cooling element a flap (5) fixed on a flap shaft (6) arranged perpendicularly to the direction of flow of the gases is arranged at one end (1') of the inner duct (1), the cooling element having, on this side, an outer flange (4) which is connected to the outer casing (3) so as to close off the latter, **characterized in that** the flap shaft (6) is mounted rotatably by means of bearings (7) for the flap shaft (6) which are arranged in the outer casing (3).

2. Cooling element according to Claim 1, **characterized in that** sealing elements (7') are arranged between the bearings (7) for the flap shaft (6) and the flap shaft (6).

3. Use of the cooling element according to Claim 1 or 2 as a cooling element for the cooling of exhaust gases from a motor vehicle.

## Revendications

1. Dispositif de refroidissement pour des gaz, qui se compose d'un canal intérieur (1) et de plusieurs canaux extérieurs (2), entourant le canal intérieur (1) et entourés d'une gaine extérieure (3), comportant au moins un premier manchon (8) pour l'alimentation en produit de refroidissement et au moins un deuxième manchon (9) pour la sortie du produit de refroidissement, dans lequel un volet (5) fixé sur un arbre (6) disposé perpendiculairement à la direction d'écoulement des gaz est monté à l'une des extrémités (1') du canal intérieur (1) et dans lequel le dispositif de refroidissement comporte, sur ce côté, une bride extérieure (4) liée à la gaine extérieure (3) en la fermant, **caractérisé par le fait que** l'arbre (6) du volet est monté, de telle manière qu'il peut tourner, sur des paliers (7) pour l'arbre (6) du volet, qui sont disposés dans la gaine extérieure (3).

2. Dispositif de refroidissement selon la revendication 1 **caractérisé par le fait que** des éléments d'étanchéité (7') sont disposés entre les paliers (7) pour l'arbre (6) du volet et l'arbre (6) du volet.

3. Mise en oeuvre du dispositif de refroidissement selon la revendication 1 ou 2 en tant que dispositif de refroidissement pour refroidir les gaz d'échappement d'un véhicule automobile.
